(19) Europäisches Patentamt

European Patent Office

Office européen des brevets

(11) **EP 2 052 291 B1**

(12) **FASCICULE DE BREVET EUROPEEN**

(45) Date de publication et mention de la délivrance du brevet:
**21.12.2011 Bulletin 2011/51**

(21) Numéro de dépôt: **07823339.2**

(22) Date de dépôt: **25.07.2007**

(51) Int Cl.:
**G02F 1/35** (2006.01)

(86) Numéro de dépôt international:
**PCT/FR2007/001282**

(87) Numéro de publication internationale:
**WO 2008/012437 (31.01.2008 Gazette 2008/05)**

(54) **COMPOSANT PASSIF DE RÉGÉNÉRATION TOUT OPTIQUE DES NIVEAUX HAUTS PAR CAVITÉ À ABSORBANTS SATURABLES**

PASSIVE KOMPONENTE FÜR OPTISCHE HOCHSTUFIGE RUNDUM-REGENERIERUNG MITTELS KAVITÄT MIT SÄTTIGBAREN ABSORPTIONSMITTELN

PASSIVE COMPONENT FOR ALL-OPTICAL REGENERATION OF HIGH LEVELS BY SATURABLE ABSORPTIONS CAVITY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.07.2006 FR 0606845**

(43) Date de publication de la demande:
**29.04.2009 Bulletin 2009/18**

(73) Titulaires:
• **UNIVERSITE PARIS-SUD 11**
**91400 Orsay (FR)**
• **Centre National de la Recherche Scientifique**
**75016 Paris (FR)**

(72) Inventeur: **SAUVAGE, Sébastien**
**75014 Paris (FR)**

(74) Mandataire: **Pontet, Bernard**
**PONTET ALLANO & Associés**
**6, Avenue du Général De Gaulle**
**78000 Versailles (FR)**

(56) Documents cités:
**FR-A1- 2 835 065**

• **C. PORZI ET AL.: "Impedance detuned high contrast vertical cavity semiconductor switch" 2005 OPTICAL FIBER COMMUNICATIONS CONFERENCE TECHNICAL DIGEST (IEEE CAT. NO. 05CH37672), vol. 4, 6 mars 2005 (2005-03-06), - 11 mars 2005 (2005-03-11) XP002418180 IEEE Piscataway, NJ, USA ISBN: 1-55752-783-0**
• **OUDAR J-L ET AL: "ULTRA-FAST QUANTUM-WELL SATURABLE ABSORBER DEVICES AND THEIR APPLICATION TO ALL-OPTICAL REGENERATION OF TELECOMMUNICATION OPTICAL SIGNALS DISPOSITIFS A ABSORBANT SATURABLE ULTRA-RAPIDE A PUITS QUANTIQUES ET APPLICATION A LA REGENERATION TOUT-OPTIQUE DES" ANNALES DES TELECOMMUNICATIONS - ANNALS OF TELECOMMUNICATIONS, GET LAVOISIER, PARIS, FR, vol. 58, no. 11/12, novembre 2003 (2003-11), pages 1667-1707, XP001192439 ISSN: 0003-4347**

**Description**

L'invention concerne un composant passif à absorbant saturable permettant la régénération tout optique d'un signal optique comme ceux utilisés pour les transmissions de données numériques, ainsi qu'un procédé de régénération et un dispositif mettant en oeuvre cette régénération. L'invention concerne aussi un procédé et un système de fabrication d'un tel composant.

Le contexte de l'invention est la régénération de signaux et d'impulsions optiques, en particulier pour les télécommunications optiques longue distance à très hauts débit.

De nombreux domaines, tels que les réseaux de communication informatique ou de télécommunications, utilisent la transmission de signaux numériques par voie optique sur de longues distances, en général par des fibres optiques. Au cours de la transmission ou du traitement, ces signaux subissent une dégradation, en particulier dans leur forme ou dans leur amplitude, qui les rend plus difficiles à détecter et à interpréter.

De telles dégradations apparaissent en particulier sur de longues distances comme dans les réseaux de transport terrestre de plusieurs centaines de kilomètres, et encore plus dans des liaisons sous-marines transocéaniques ou trans-pacifiques de plus de quatre ou six mille kilomètres. De telles dégradations peuvent aussi apparaître dans le cas d'environnements de transmission difficiles, par exemple de fibres de mauvaise qualité ou de multiples traitements intermédiaires générateurs de parasites ou d'interférences.

Plus particulièrement, la propagation des impulsions dans des fibres optiques conduit à une déformation nuisible du profil temporel des impulsions, mais aussi à une atténuation de leur énergie due aux pertes de propagation. L'atténuation nécessite souvent d'utiliser des amplificateurs optiques disposés périodiquement le long des lignes de transmission pour redonner de l'énergie aux impulsions. Or cette étape d'amplification modifie aussi la forme temporelle des impulsions, notamment en ajoutant du bruit d'intensité.

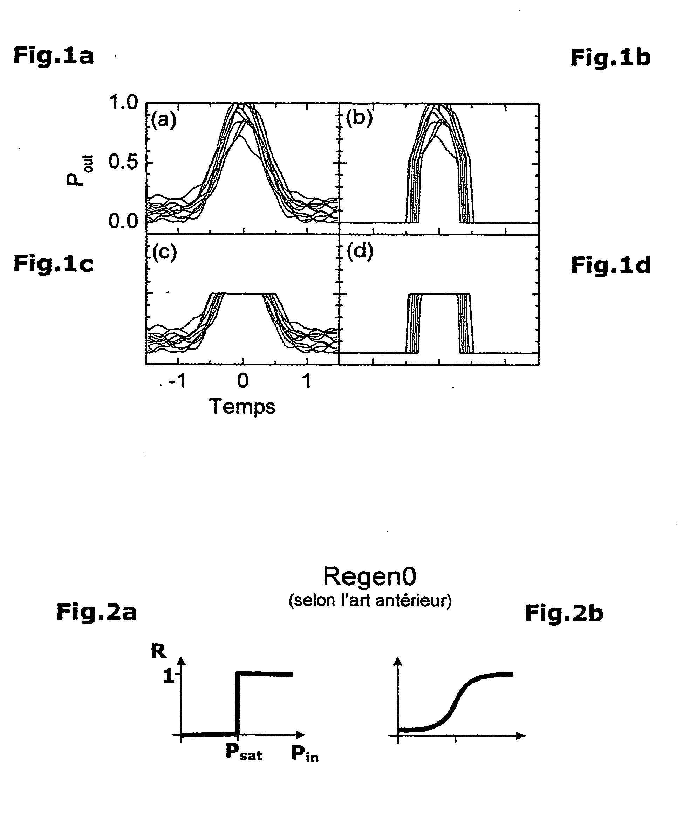

La FIGURE 1a représente un profil temporel typique de telles impulsions dégradées. Lors de la réception des impulsions le bruit en intensité nuit à la discrimination des niveaux bas (les "0") et des niveaux hauts (les "1") des impulsions, en introduisant un taux d'erreurs lors de leur détection qui peut être gênant ou rédhibitoire pour la transmission efficace de l'information.

Les technologies actuelles de télécommunication utilisent une transmission par fibre optique de signaux monochromatique numériques émis par un laser ou modulés à des débits de l'ordre de 10 Gb/s. Pour pallier aux dégradations du signal, on interpose des dispositifs optoélectroniques réalisant des opérations de régénération des signaux comprenant une Réamplification, une Remise en forme et une Resynchronisation, également appelées « 3R ». Ces opérations sont réalisées par des composants électroniques, et nécessitent la conversion des signaux optiques en signaux électroniques et *vice versa.*

De tels équipements sont actuellement complexes, coûteux, encombrants, et nécessitent en outre une alimentation électrique.

De plus, une nouvelle étape technologique dans la transmission est actuellement en cours de préparation avec la mise au point d'équipements réalisant une transmission à un débit de l'ordre de 40 Gb/s. Cette technologie prévoit en outre d'utiliser un multiplexage en longueur d'ondes (WDM : Wavelength Division Multiplexing) permettant un débit global de l'ordre de 1 Tera-bit par seconde, par exemple 32 canaux à 40 Gb/s chacun. Cette nouvelle technologie rend d'autant plus important l'intérêt de pouvoir améliorer le processus de régénération des signaux.

Pour cela, des méthodes de régénération ont été proposées de type tout optique, c'est à dire sans nécessiter de conversion optique-électronique, et de type passif, c'est-à-dire n'utilisant comme seule source d'énergie que l'énergie des impulsions elles-mêmes sans apport d'énergie extérieure.

Le brevet d'invention FR2 835 065 propose par exemple un composant permettant la régénération des niveaux bas des impulsions, que l'on désignera ici sous l'appellation de *Regen0.* Cette fonction de régénération *Regen0* est obtenue grâce à un composant fonctionnant en réflexion et utilisant un matériau optique non-linéaire à absorption saturable.

La réflectivité $R$ du composant décrit la fraction de puissance d'entrée $P_{in}$ qui est réfléchie par le composant. La non-linéarité de la réflectivité est exprimée par le fait que $R$ dépend de $P_{in}$. En sortie la puissance de l'impulsion est alors $P_{out} = R(P_{in}).P_{in}$. La puissance d'entrée des impulsions est supposée être de l'ordre de la puissance de saturation $P_{sat}$ du composant, qui est la puissance typique à laquelle la non-linéarité optique se produit.

L'effet de principe d'une telle régénération *Regen0* sur le profil temporel des impulsions est représenté sur la FIGURE 1b de façon schématique, sans tenir compte de certaines autres contraintes. Un tel effet de remise en forme est obtenu grâce à une réflectivité qui présente une dépendance avec la puissance d'entrée $P_{in}$ tel que représentée, dans le principe, sur la FIGURE 2a. Très en dessous de la puissance de saturation $P_{sat}$, la puissance de sortie est nulle : $P_{out} = 0$ et le bruit est éliminé. Très au dessus de cette puissance de saturation, la puissance réfléchie est inchangée : $P_{out} = P_{in}$. Idéalement la fonction *Regen0* permet donc de maximiser le contraste des impulsions et d'assurer une détection des impulsions sans erreur, en plaçant par exemple le seuil de détection des impulsions à $P_{sat}$.

En pratique une telle réflectivité $R(P_{in})$ peut être obtenue selon l'art connu grâce à une cavité Fabry-Pérot à base de semi-conducteurs contenant des couches à absorption saturable. Ces cavités sont constituées d'un miroir arrière de réflectivité $R_b$ et d'un miroir avant de plus faible réflectivité $R_f$. La fonction de régénération des niveaux bas *Regen0* est obtenue en agençant la structure du composant de façon à remplir le plus possible la condition d'adaptation d'impédance suivante :

$$R_f = \exp(-2\alpha_0 L)R_b \qquad\qquad (1)$$

où $\alpha_0 L$ est l'absorbance totale des couches intra cavités.

La réflectivité correspondante est représentée schématiquement sur la FIGURE 2b. La faible réflectivité aux petites puissances assure l'extinction partielle des pieds de l'impulsion alors que la réflectivité plus élevée aux fortes puissances favorise la réflexion des niveaux hauts des impulsions. Au final on s'attend idéalement à l'augmentation du contraste de l'impulsion et à une meilleure discrimination de ces niveaux hauts et bas conduisant à une diminution du taux d'erreurs de détection.

Les documents "Impedance-Detuned High Contrast Vertical Cavity Semiconductor Switch" de C. Porzi et al. et "Ultra-fast quantum-well saturable absorber devices and their application to all-optical regeneration of telecommunication optical signals" de Jean-Louis Oudar et al. sont des exemples de tels composants.

Ces techniques présentent cependant certaines limites, qui gênent en particulier la simplification et l'amélioration des technologies existantes (10 Gb/s) ainsi que le développement et l'industrialisation des nouvelles technologies (40 Gb/s).

Du fait qu'elles ne régénèrent que la forme des pieds d'impulsions, c'est à dire la forme des « 0 », ces techniques n'améliorent pas et même augmentent le bruit présent dans les niveaux hauts de ces impulsions, ce qui reste une cause de perturbation pour la détection du signal.

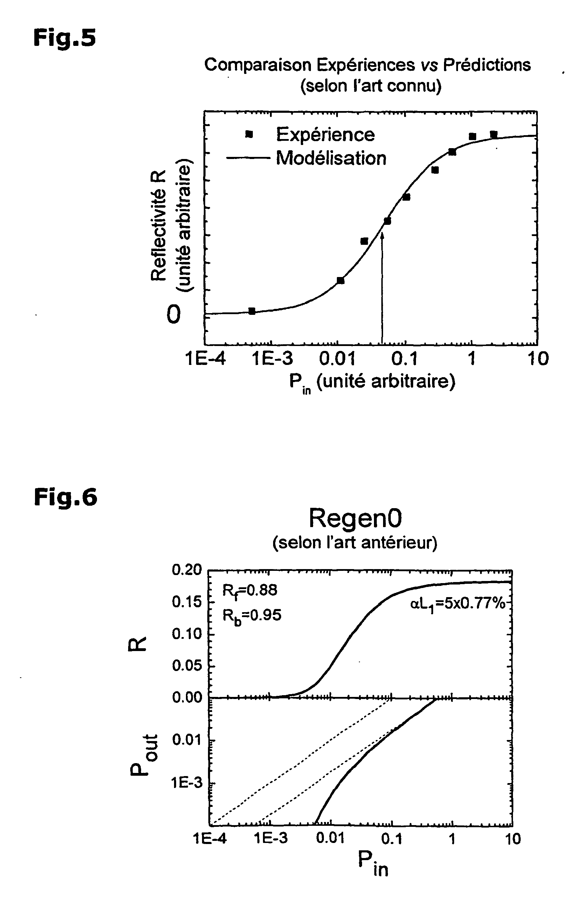

De plus, cette régénération des « 0 » amplifie le bruit relatif $\delta P_{out}$ / $P_{out}$ sur les "1", du fait de la pente toujours positive de la réflectivité $R(P_{in})$, ainsi qu'on le voit sur la partie basse de la FIGURE 6. Cela conduit à une diminution de l'écart permettant de distinguer les niveaux bas des niveaux hauts, c'est à dire à une fermeture du « diagramme de l'oeil », en particulier lors de l'enchaînement de tels régénérateurs le long des lignes de transmission. Il en résulte que cette technique ne permet pas d'enchaîner beaucoup de régénérateurs sans risquer d'augmenter le taux d'erreur binaire, ce qui est le contraire de l'effet recherché.

Un but de l'invention est de pallier les inconvénients de l'art connu, par exemple en diminuant la complexité, la fragilité, la sensibilité, le coût, ou l'encombrement des régénérateurs nécessaires au maintien d'une transmission de qualité satisfaisante.

Plus particulièrement, l'invention cherche à d'obtenir une régénération tout optique de la forme des « 1 » du signal transmis, si possible de façon passive.

L'invention cherche aussi à obtenir une régénération tout optique passive de la forme à la fois des « 1 » et des « 0 » du signal transmis, si possible de façon combinée dans un même composant.

Un objectif est aussi d'obtenir tout ou partie de ces avantages dans une configuration ou un encombrement qui soient applicables aux technologies WDM de transmission utilisant un multiplexage en longueur d'onde.

Un des buts de l'invention est d'obtenir tout ou partie de ces avantages combinés à des temps de réponse rapides, en particulier compatibles avec les technologies au débit de 40 Gb/s.

Un autre but est aussi d'obtenir tout ou partie de ces avantages dans une configuration fiable et robuste permettant de mettre en oeuvre des techniques de régénération tout optique passive même sans atteindre les temps de réponse nécessaires aux technologies futures. Il peut s'agir par exemple d'améliorer les composants utilisés dans les technologies actuelles de 10 Gb/s ou moins. Il peut s'agir aussi de satisfaire les besoins des différents acteurs de la recherche fondamentale ou industrielle, par exemple pour pousser plus avant la recherche de nouveaux composants ou pour étudier les capacités et problèmes de la régénération tout optique passive au sein de systèmes plus vastes et au cours du temps.

L'invention propose un composant, de préférence monolithique, assurant, par sa réflectivité non-linéaire $R(P_{in})$, une fonction passive de régénération des niveaux hauts des impulsions d'un signal.

Pour cela, l'invention propose d'utiliser une cavité à absorption saturable dans une configuration tout à fait contre intuitive, qui consiste à utiliser un miroir arrière qui est moins réfléchissant que celui qui est placé devant lui.

Cette cavité est utilisée en réflexion du signal optique, c'est à dire que le signal incident est injecté dans la cavité et en ressort après résonance dans la direction générale d'où il est venu. Au sein de cette cavité, la première et la dernière réflexion du signal se font dans le sens d'une réflexion sur le miroir arrière.

On obtient alors un composant optique de traitement d'un signal optique qui fonctionne par réflexion de ce signal dans une cavité résonante à absorption saturable formée entre un premier miroir dit arrière et un deuxième miroir situé du côté du signal optique incident, la réflectivité du deuxième miroir étant supérieure ou égale à la réflectivité du miroir arrière.

Dans un premier mode de réalisation, un tel composant est utilisé pour effectuer une régénération des niveaux hauts du signal. Ce mode de réalisation assure alors une fonction dite *"Regen1"* par une solution tout optique passive. Dans cette configuration, le deuxième miroir pourra être appelé "miroir avant".

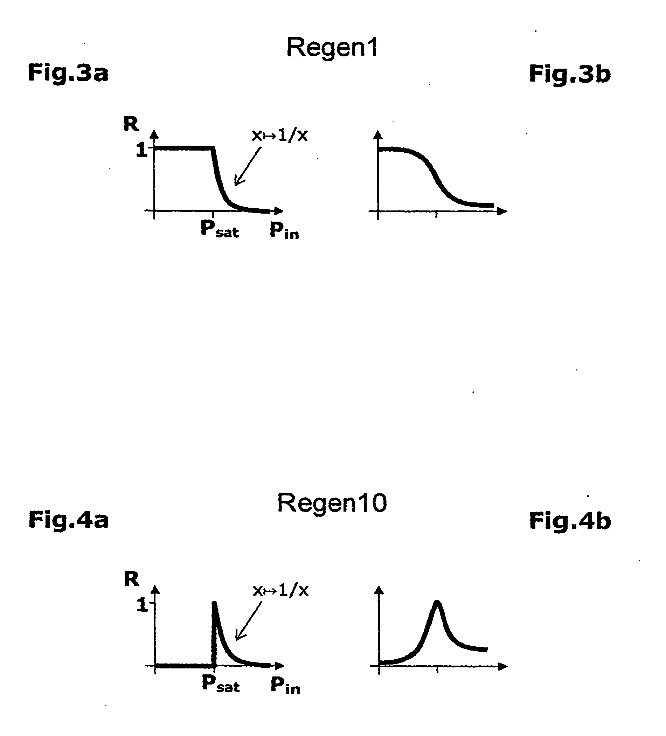

Un tel composant *Regen1* présente une réflectivité telle que représentée, dans son principe, sur la FIGURE 3a, et obtenue en pratique telle que représentée schématiquement en FIGURE 3b. Cette fonction laisse les basses puissances inchangées. En revanche la dépendance de la réflectivité selon l'inverse de la puissance d'entrée, soit $1/P_{in}$, au-delà de la puissance de saturation assure la suppression du bruit sur les niveaux hauts des impulsions. La puissance de sortie est alors constante et égale à la puissance de saturation: $P_{out} = P_{sat}$ = constante. La FIGURE 1c représente, dans son principe, l'effet obtenu sur des impulsions bruitées telles que celles de la FIGURE 1a.

Un tel composant de type Regen1 peut alors être couplé avec un composant réalisant la fonction Regen0 par exemple un composant du type mentionné précédemment. De préférence, l'invention propose de faire passer le signal d'abord par le composant Regen0 et ensuite par le composant Regen1.

Dans un deuxième mode de réalisation, l'invention propose un composant, de préférence monolithique, assurant, par sa réflectivité non-linéaire $R(P_{in})$, une fonction passive de régénération des niveaux hauts et des niveaux bas des impulsions.

Pour cela, l'invention propose d'ajouter une autre cavité à absorption saturable par dessus la première, c'est-à-dire du côté du signal optique incident par rapport au deuxième miroir.Un tel composant comprend ainsi une deuxième cavité résonante à absorption saturable formée entre le deuxième miroir et un troisième miroir situé du côté de la réflexion du signal optique par rapport au deuxième miroir. Dans cette configuration, le troisième miroir pourra être appelé "miroir avant" et le deuxième miroir pourra alors être appelé "miroir médian".

Dans ce deuxième mode de réalisation, le composant apporte une solution tout optique passive à la régénération simultanée des "1" et des "0", soit une fonction intégrée que l'on appellera *"Regen10"*.

Un tel composant *Regen10* présente une réflectivité recherchée telle que représentée, dans son principe, sur la FIGURE 4a, et les résultats obtenus en pratique sont représentés schématiquement en FIGURE 4b. Le bruit sur les niveaux bas, dont la puissance est inférieure à la puissance de saturation $P_{sat}$, est supprimé car la réflectivité est nulle. Le bruit sur les niveaux hauts, dont la puissance est supérieure à la puissance de saturation $P_{sat}$, est également supprimé grâce à la dépendance de la réflectivité en $1/P_{in}$. L'effet obtenu sur des impulsions bruitées et cumulées est représenté, dans son principe, sur la FIGURE 1d.

L'invention propose aussi un procédé de régénération d'un signal optique par l'utilisation de tels composants, ainsi qu'un dispositif mettant en oeuvre ce procédé et un système de télécommunication comprenant un tel dispositif. La présente invention porte aussi sur un procédé et un système de fabrication de tels composants.

Pour la régénération des niveaux hauts des impulsions (fonction "Regen1"), l'invention apporte en particulier les mêmes types d'avantages que les techniques actuellement connues pour obtenir la fonction "Regen0" telles que mentionnées plus haut. Ces avantages s'énoncent en particulier en termes de bande spectrale admissible pour le fonctionnement avec des systèmes multiplexés en longueur d'onde (WDM), de puissance de saturation réduite par rapport aux absorbants saturables hors cavité, de structure thermiquement favorable dans une configuration de réflexion, de coût, de compacité et de potentiel d'évolution pour les applications futures à très hauts débits (par exemple 160 Gbit/s).

L'invention permet en particulier de régénérer passivement les "1", c'est-à-dire de diminuer le bruit sur ces niveaux hauts, sans apporter d'énergie extérieure autre que celle des impulsions elles-mêmes. De plus, cette régénération se fait en mode multi canal et permet de traiter plusieurs canaux simultanément avec le même composant.

L'invention permet en outre de régénérer simultanément et passivement les "0" et les "1" en diminuant le bruit à la fois sur ces deux niveaux grâce à un composant monolithique, peu encombrant et réunissant plusieurs fonctions pour un coût et une complexité inférieure à celle de la réalisation et du couplage de deux composants différents.

Le fait de régénérer simultanément les niveaux hauts et bas permet en outre d'éviter ou de limiter certains effets secondaires néfastes de la technologie connue de "Regen0", comme la fermeture du "diagramme de l'oeil" mentionnée plus haut.

Ainsi, en permettant de régénérer les niveaux hauts, l'invention permet de lever un verrou technologique en permettant la réalisation de dispositifs régénérant complètement la forme des signaux. Ces dispositifs peuvent fonctionner de façon passive et en tout optique, ce qui permet de concevoir des appareils compacts pouvant être disposés dans des endroits isolés sans alimentation en énergie.

D'autres particularités et avantages de l'invention ressortiront de la description détaillée de modes de réalisation nullement limitatifs, et des dessins annexés, où :

- Les FIGURE 1a à FIGURE 1d représentent la courbe de puissance en fonction du temps pour un groupe d'impulsions dans le cas:

  ○ FIGURE 1a: d'impulsions d'entrée bruitées à contraste limité,

○ FIGURE 1b: des mêmes impulsions, de façon simplifiée, après régénération de forme des niveaux bas,
○ FIGURE 1c: des mêmes impulsions, de façon simplifiée, après régénération de forme des niveaux hauts, et
○ FIGURE 1d: des mêmes impulsions, de façon simplifiée, après régénération de forme des niveaux hauts et bas;

- Les FIGURE 2a et FIGURE 2b représentent schématiquement la réflectivité en fonction de la puissance reçue, pour un composant selon l'art antérieur (Regen0) :

○ FIGURE 2a: dans une forme représentant son effet de principe,
○ FIGURE 2b: dans une forme plus proche de la pratique;

- Les FIGURE 3a et FIGURE 3b représentent schématiquement la réflectivité en fonction de la puissance reçue, pour un composant de type Regen1 selon le premier mode de réalisation de l'invention:

○ FIGURE 3a: dans une forme représentant son effet de principe,
○ FIGURE 3b: dans une forme plus proche de la pratique;

- Les FIGURE 4a et FIGURE 4b représentent schématiquement la réflectivité en fonction de la puissance reçue, pour un composant de type Regen10 selon le deuxième mode de réalisation de l'invention:

○ FIGURE 4a: dans une forme représentant son effet de principe,
○ FIGURE 4b: dans une forme plus proche de la pratique;

- La FIGURE 5 représente, pour la réflectivité en fonction de la puissance d'entrée, une comparaison entre une mesure expérimentale effectuée sur un composant de type Regen0 selon l'art connu et la prédiction du modèle utilisé pour concevoir l'invention;
- La FIGURE 6 représente, en fonction de la puissance d'entrée, la réflectivité et la puissance de sortie calculées d'une cavité optique à absorbants saturables dans une configuration proche d'un type Regen0;
- La FIGURE 7 représente schématiquement une cavité optique à absorbants saturables pour un composant de type Regen1 selon le premier mode de réalisation de l'invention;
- La FIGURE 8 représente, en fonction de la puissance d'entrée, la réflectivité et la puissance de sortie calculées d'une cavité optique à absorbants saturables pour un composant de type Regen1 selon le premier mode de réalisation de l'invention;
- La FIGURE 9 représente schématiquement une cavité optique à absorbants saturables pour un composant de type Regen10 selon le deuxième mode de réalisation de l'invention;
- La FIGURE 10 représente, en fonction de la puissance d'entrée, la réflectivité et la puissance de sortie calculées d'une cavité optique à absorbants saturables pour un composant de type Regen10 selon le deuxième mode de réalisation de l'invention;
- La FIGURE 11 représente un exemple réaliste de réalisation de la structure d'une cavité optique à absorbants saturables à miroirs de Bragg et puits quantiques, pour un composant de type Regen10 selon le deuxième mode de réalisation de l'invention;
- La FIGURE 12 représente, en fonction de la puissance d'entrée, la réflectivité et la puissance de sortie calculées pour l'exemple de structure réaliste de la FIGURE 11;
- La FIGURE 13 représente la distribution de l'amplitude du champ électrique dans l'exemple de structure de la FIGURE 11, à la résonance de la FIGURE 14;
- La FIGURE 14 représente la dépendance spectrale calculée de la réflectivité de l'exemple de structure réaliste de la FIGURE 11.

La présente invention a été quantifiée et testée par simulation numérique, à travers une modélisation mathématique du comportement optique des matériaux et de leur combinaison.

Des mesures permettant de rendre compte quantitativement des mesures de réflectivité ont été réalisées sur des échantillons matériels de composants réalisant la régénération du niveau bas des impulsions (fonction "Regen0"). Ainsi qu'illustré en FIGURE 5, ce modèle mathématique a alors été ajusté et vérifié en comparant ces mesures réelles avec les valeurs qu'il prédit pour ces mêmes échantillons matériels. Ces échantillons matériels présentent les caractéristiques de réflectivité de $R_f$ = 0.88 pour le miroir avant, de $R_b$ = 0.95 $(R_f \leq R_b)$ pour le miroir arrière et une absorption saturable $\alpha L_1$ = 3.85 % équivalente à celle de 5 puits quantiques InGaAs épitaxiés sur InP.

La FIGURE 6 représente ces mêmes valeurs prédites de la réflectivité $R(P_{in})$ et de la puissance de sortie $P_{out}$

en fonction de la puissance $P_{in}$ des impulsions à l'entrée. Le modèle réaliste utilisé pour effectuer ces prédictions repose sur la résolution des équations de Maxwell pour des empilements de couches de matériaux d'indice optique présentant une partie complexe. La loi de saturation de l'absorption réaliste utilisée est $\alpha L(P) = \dfrac{\alpha L_0}{1 + P/P_{sat}}$ où P représente la puissance (reliée à l'intensité) de l'onde électromagnétique dans la cavité au niveau des puits quantiques.

La courbe $P_{out}$ est comparée avec les droites pointillées correspondant à une dépendance linéaire $P_{out} = a\ P_{in}$, où $a$ est une constante. La pente constante des droites pointillées en échelle logarithmique correspond au cas limite où aucun bruit relatif n'est ajouté sur $P_{out}$ par rapport à $P_{in}$. Lorsque la pente de $P_{out}$ en échelle logarithmique est plus petite que celle des droites pointillées, le bruit relatif sur $P_{out}$ est plus faible que sur $P_{in}$ et correspond à l'effet produit par l'invention de type limiteur optique.

Lorsque la pente de $P_{out}$ en échelle logarithmique est plus grande que celle des droites pointillées, comme c'est le cas sur la FIGURE 6 décrivant l'art connu, le bruit relatif sur $P_{out}$ est augmenté à chaque passage dans le régénérateur, ce qui est nuisible. Cette figure montre que les composants *Regen0* selon l'art connu non seulement ne régénèrent pas les niveaux hauts des impulsions, mais dégradent considérablement le bruit sur les "1" quelle que soit la puissance d'entrée utilisée.

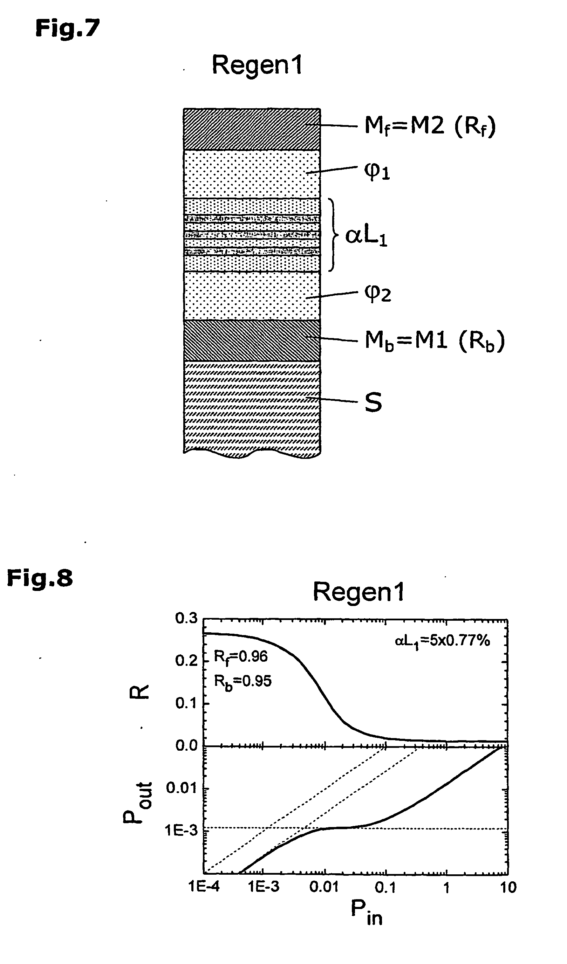

Dans le premier mode de réalisation de l'invention, la FIGURE 7 illustre schématiquement la structure d'un composant de type Regen1. Ce composant comprend une cavité dite de Fabry-Pérot formée entre un premier miroir M1 (ou miroir arrière $M_b$) de réflectivité $R_b$ et un deuxième miroir M2 (ici dit miroir avant $M_f$) de réflectivité $R_f$. Ces deux miroirs enchâssent un matériau à absorption saturable d'une absorbance totale valant $\alpha L_1$, c'est à dire correspondant à un indice d'absorption "$\alpha$" sur une longueur "$L_1$". Cet absorbant saturable est séparé de chacun des deux miroirs par deux couches de phase $\varphi_1$, et $\varphi_2$. La cavité repose sur un substrat S évacuant la chaleur produite par l'absorption des impulsions. Par rapport à l'art connu pour la régénération tout optique des impulsions, cette cavité est conçue avec la caractéristique originale et contre intuitive : $R_f \geq R_b$ c'est-à-dire une réflectivité du miroir avant ($M_f$) plus élevée que la réflectivité du miroir arrière ($M_b$).

Ainsi, il est bien clair que la relation *entre* $R_b$ et $R_f$ ne correspond plus à la relation d'adaptation d'impédance (relation (1) mentionnée plus haut) qui est reconnue comme nécessaire dans l'art antérieur, et décrit au contraire une cavité "retournée" ou "à l'envers". Cette caractéristique spécifique permet la régénération tout optique des niveaux hauts des impulsions.

La réalisation du composant *Regen1* utilise des techniques connues d'épitaxie de semi-conducteurs, et différents procédés technologiques connus appliqués à ces matériaux. L'absorbant saturable peut être constitué, de façon non limitative et donnée à titre d'exemple, par une ou plusieurs couches massives de GaInAs ou GaAlAs, un ou plusieurs puits quantiques InGaAs ou GaAlAs, un ou plusieurs plans de boîtes ou points quantiques InGaAs insérés dans des barrières de InP ou de GaAs et absorbant aux longueurs d'onde de fonctionnement du composant, soit autour de 1,3 et 1,55 $\mu$m pour les composants servant aux télécommunications optiques actuelles.

Dans le cas des puits quantiques, pour minimiser la dépendance en polarisation de la réflectivité en incidence normale, dépendance due au dichroïsme d'absorption des puits quantiques et à l'anisotropie du cristal aux interfaces, on choisira préférentiellement selon l'invention des puits quantiques semi-conducteurs avec atomes communs, et de préférence avec anions communs, dans les barrières, par exemple : puits quantiques InGaAs entre des barrières InAlAs. La dépendance en polarisation de l'absorption est donnée dans le document : Investigations of giant "forbidden" optical anisotropy in GaInAs-InP quantum well structures, O. Krebs, W. Seidel, J. P. André, D. Bertho, C. Jouanin, P. Voisin; Semicond. Sci. Technol. 12 (1997) 938-942.

L'absorption est saturable c'est-à-dire qu'elle tend vers zéro lorsque la puissance (ou l'intensité) de l'onde qui traverse le matériau absorbant tend vers l'infini. En pratique l'absorption saturable expérimentale exhibe une dépendance qui peut être décrite autour de la puissance de saturation par la formule : $\alpha L(P_{in}) = \alpha L_0/(1 + P_{in}/P_{sat})$ où $\alpha L_0$ est l'absorption du matériau en l'absence d'éclairement. Du point de vue temporel, l'absorption saturable peut être rendue plus rapide, avec un temps de réponse picoseconde ou sub-picoseconde, en utilisant une croissance épitaxiale à basse température, ou en utilisant l'incorporation d'impuretés ou encore l'irradiation des couches par des ions lourds ou légers.

En dehors des miroirs et des couches à absorption saturable, les autres couches sont transparentes aux longueurs d'onde de travail, autant que possible.

Les miroirs de la cavité ont une réflectivité inférieure à 1, sont considérés sans pertes. Le miroir arrière $M_b$ est de préférence métallique, et les autres miroirs sont d'un type qui laisse passer l'énergie de l'onde qui n'est pas réfléchie. En pratique l'existence de pertes résiduelles dans les miroirs ne modifie pas le concept de l'invention. A titre d'exemple et de façon non limitative, les miroirs peuvent être réalisés sous la forme de "miroirs de Bragg" selon des techniques connues, soit par épitaxie de couches de semi-conducteurs, soit obtenus par dépôt de couches diélectriques. L'empilement des différentes couches et le report de la structure, composée de la cavité et des absorbants saturables, sur un substrat S sont réalisés selon des techniques connues.

La FIGURE 8 décrit la réflectivité $R(P_{in})$ et la dépendance de la puissance de sortie $P_{out}$ pour le composant *Regen1* selon le premier mode de réalisation de l'invention tel que représenté sur la FIGURE 7, avec la relation $R_f \geq R_b$. La relation d'adaptation d'impédance selon l'art connu n'est donc pas réalisée. Le cas considéré est un exemple nullement limitatif, et présente des caractéristiques de réflectivité valant $R_f$=0.96, $R_b$ =0.95 et $\alpha L_1$ = 3.85 %. On notera que des réflectivités plus élevées que 0.95-0.96 peuvent tout à fait être utilisées et conduisent à diminuer utilement les pertes du composant selon l'invention. Le cas considéré a donc valeur de généralité.

L'annulation de la pente de la courbe $P_{out}$ permet d'assurer la régénération des niveaux hauts des impulsions en éliminant le bruit sur ces niveaux. La pente de la courbe $P_{out}$ plus petite en échelle logarithmique que les droites pointillées de pente 1, à toute les puissances, montre que l'invention ne rajoute pas non plus de bruit sur les niveaux bas des impulsions. Ainsi la réflectivité du premier composant selon l'invention permet d'assurer une régénération de type *Regen1.*

Il est à noter que l'effet recherché peut être obtenu avec des réflectivités Rf et Rb présentant des valeurs peu différentes l'une de l'autre (0,96 et 095), alors que la relation (1) d'adaptation d'impédance conditionnant le fonctionnement en Regen0 selon l'art antérieur fournit des couples de valeurs éloignées de cette égalité, par exemple 0,88 et 0,95. La caractéristique de l'invention définissant par une réflectivité $R_f$ du miroir avant supérieure à celle $R_b$ du miroir arrière n'exclut donc pas les cas où ces deux valeurs sont sensiblement égale.

Avantageusement, un composant *Regen1* selon l'invention peut être enchaîné avec un composant selon l'art connu *Regen0,* pour réaliser de façon simple et efficace une fonction de régénération *Regen10* de régénération des niveaux hauts et des niveaux bas.

De préférence, le composant *Regen1* est placé *après* le composant *Regen0* afin que la composition des fonctions de régénération donne la fonction *Regen10.*

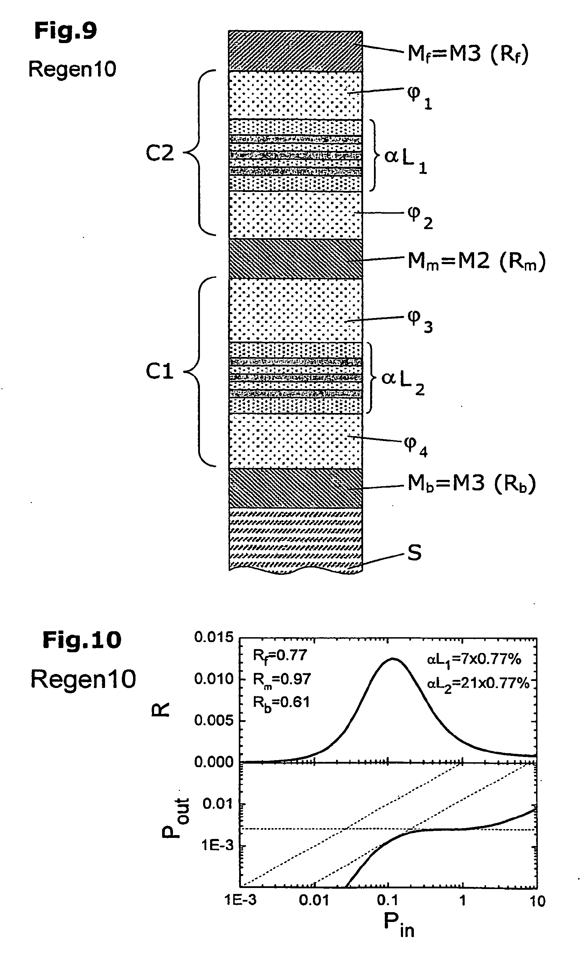

Selon le deuxième mode de réalisation de l'invention, la FIGURE 9 illustre schématiquement la structure d'un composant de type Regen10. Ce composant est formé de deux cavités Fabry-Pérot couplées partageant un miroir dit central ou médian $M_m$ de réflectivité $R_m$. Une première C1 de ces cavités est formée entre un premier miroir M1 (dit miroir arrière $M_b$) et un deuxième miroir M2, ici constitué par ce miroir médian $M_m$. La deuxième C2 de ces cavités est formée entre ce même miroir médian $M_m$ et troisième miroir M3 (ici dit miroir avant $M_f$). Chacune de ces cavités C2 et C1 enchâsse un matériau à absorption saturable respectivement $\alpha L_1$ et $\alpha L_2$, chacun de ces matériaux absorbants étant séparé des miroirs adjacents par deux couches de phase respectivement $\varphi_1$, $\varphi_2$ pour $\alpha L_1$ et $\varphi_2, \varphi_4$ pour $\alpha L_2$. Les déphasages $\varphi_1 + \varphi_2$ et $\varphi_3 + \varphi_4$ introduits par les couches de phase sont choisis afin que la longueur d'onde de travail corresponde spectralement à une résonance de réflectivité. La structure repose sur un substrat S transparent aux longueurs d'onde de fonctionnement de l'invention qui permet d'évacuer une partie de l'énergie électromagnétique loin de la structure.

Les trois miroirs $M_f$, $M_m$ et $M_b$ sont partiellement transparents et présentent respectivement des réflectivités $R_f$, $R_m$ et $R_b$ en transmettant idéalement 1-$R_f$, 1-$R_m$ et 1-$R_b$. Ils peuvent être fabriqués à partir de couches diélectriques ou de miroirs de Bragg réalisés par exemple par croissance épitaxiale de semi-conducteurs. Les réflectivités satisfont les deux relations suivantes : $R_m \geq R_f$ et $R_m \geq R_b$ pour pouvoir obtenir la régénération tout optique et simultanée des niveaux hauts et des niveaux bas des impulsions. La réflectivité d'une telle structure s'écrit :

$$R = \frac{\left( \exp(-\alpha L_1) \left( \exp(-\alpha L_2) \sqrt{R_b} - \sqrt{R_m} \right) + \sqrt{R_f} \left( 1 - \exp(-\alpha L_2) \sqrt{R_b R_m} \right) \right)^2}{\left( \sqrt{R_b R_m} \exp(-\alpha L_2) + \exp(-\alpha L_1) \sqrt{R_f} \left( \sqrt{R_m} - \exp(-\alpha L_2) \sqrt{R_b} \right) - 1 \right)^2} \qquad (2)$$

La conception d'un composant selon l'invention assurant la fonction *Regen10* implique donc de déterminer les trois réflectivités $R_f$, $R_m$, $R_b$ et les deux absorptions saturables $\alpha L_1$ et $\alpha L_2$.

Dans un exemple particulièrement favorable, pour le composant *Regen10* de la FIGURE 9, exprimant une réflectivité nulle à puissance d'entrée infiniment petite, le choix de ces paramètres peut être déterminé en satisfaisant une relation dite d'adaptation d'impédance qui s'écrit comme suit :

$$R_f = \frac{\exp(-2\alpha L_1) \left( \sqrt{R_m} - \exp(-\alpha L_2) \sqrt{R_b} \right)^2}{\left( \exp(-\alpha L_2) \sqrt{R_b} \sqrt{R_m} - 1 \right)^2} \qquad (3)$$

En pratique on ne cherchera pas nécessairement à satisfaire exactement cette relation, préférant par exemple ajuster la dépendance de la réflectivité avec la puissance incidente de façon à assurer la meilleure fonction de régénération *Regen10.*

La FIGURE 10 décrit la réflectivité et la puissance de sortie pour le composant décrit précédemment et prédites à partir de l'expression analytique (2) ci-dessus, pour les valeurs suivantes:

| $R_f$=0,77 | $\alpha L_1$= 7 $\times$ 0,77% |
|---|---|
| $R_m$=0,97 | $\alpha L_2$= 21 $\times$ 0,77% |
| $R_b$=0,61 | |

La forme de la courbe de réflectivité satisfait à la forme recherchée pour une fonction *Regen10* telle que représentée sur la FIGURE 4b. Quantitativement la pente $P_{out}$ plus grande que 1 (en échelle logarithmique) aux basses puissances d'entrée augmente le contraste de l'impulsion tandis que le plateau de $P_{out}$ supprime le bruit sur les niveaux hauts des impulsions. Le plateau correspond à une réflectivité $R(P_{in})$ inversement proportionnelle à $P_{in}$ : $R(P_{in})=\alpha/P_{in}$, avec a=constante, qui présente l'effet de type limiteur optique recherché.

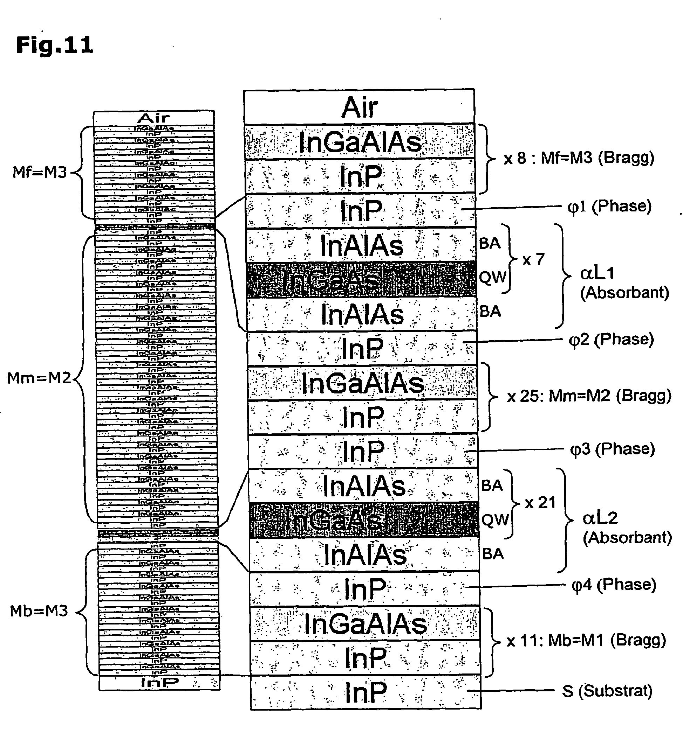

La FIGURE 11 représente une structure constituant un exemple de réalisation d'un composant de type Regen10 selon le deuxième mode de réalisation de l'invention, dans une représentation schématique à gauche et une représentation symbolique à droite. Cet exemple ne doit pas être vu comme limitatif et permet en particulier de montrer qu'il est possible de concevoir concrètement un composant de type *Regen10* présentant une configuration compatible avec les technologies de production et de mises en oeuvre de telles catégories de composants. Le composant est formé de trois miroirs de Bragg M1, M2 et M3 à base de semi-conducteurs épitaxiés, par exemple par déposition chimique d'organométallique en phase vapeur, faisant alterner des couches submicrométriques de quaternaire InGaAlAs et binaire InP. Ces couches sont au nombre de 11 paires pour le premier miroir M1 (ou $M_b$), 25 paires pour le second miroir M2 (ou $M_m$) et 8 paires pour le troisième miroir M3 (ou $M_f$). Ces trois miroirs enchâssent une série de puits quantiques QW, ici en InGaAs, alternant avec des barrières BA, ici en InAlAs, épitaxiés selon le même procédé et dont les épaisseurs sont choisies afin de donner une absorption à la longueur d'onde des télécommunications de 1,55 $\mu$m. La première série $\alpha L_1$ contient 7 puits quantiques et 8 couches barrières BA. La deuxième série $\alpha L_2$ contient 21 puits quantiques et 22 couches barrières BA. Les miroirs et les séries de puits quantiques sont séparés par des couches de phases $\varphi_1$, $\varphi_2$, $\varphi_3$ et $\varphi_4$ en InP. La structure est elle-même épitaxiée sur un substrat S transparent à 1,55 $\mu$m de longueur d'onde.

Les différentes couches présentent les épaisseurs suivantes:

| Couche | Matériau | Épaisseur (nm) |
|---|---|---|
| M3 | InGaAlAs | 110,5 |
| M3 | InP | 122,7 |
| $\varphi_1$ | InP | 118 |
| BA | InAlAs | 7 |
| QW | InGaAs | 9 |
| BA | InAlAs | 7 |
| $\varphi_2$ | InP | 118 |
| M2 | InGaAlAs | 110,5 |
| M2 | InP | 122,7 |
| $\varphi_3$ | InP | 116 |
| BA | InAlAs | 7 |
| QW | InGaAs | 9 |
| BA | InAlAs | 7 |
| $\varphi_4$ | InP | 116 |
| M1 | InGaAlAs | 110,5 |
| M1 | InP | 122,7 |

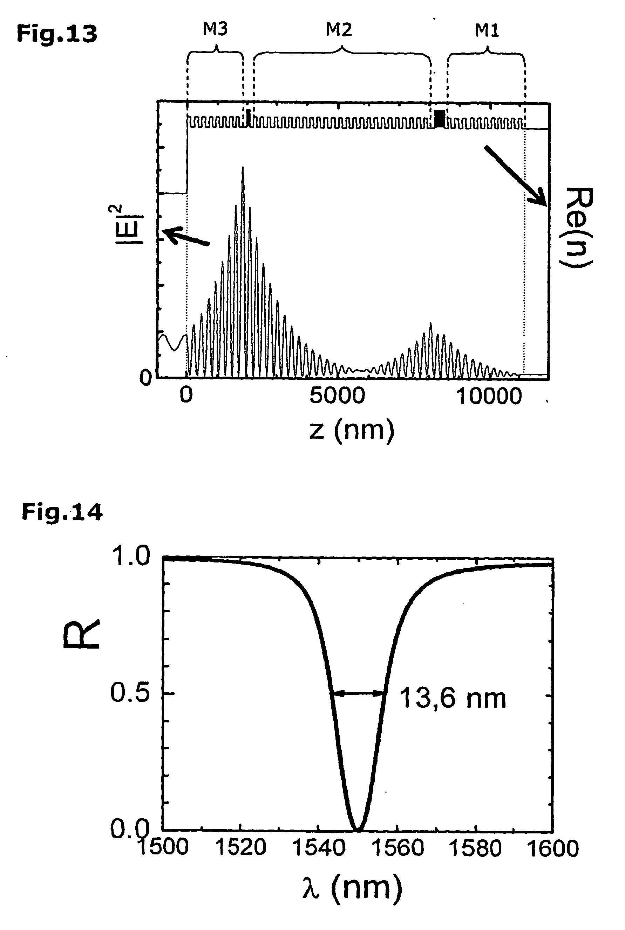

L'ensemble représente une épaisseur d'environ 11 $\mu$m, représentée sensiblement à l'échelle sur l'abscisse "z" de la FIGURE 13.

Cet exemple de réalisation présente alors les valeurs de réflectivité et d'absorption suivantes:

| | |
|---|---|
| $R_r$=0,77 | $\alpha L_1$= 7 $\times$ 0,77% |
| $R_m$=0,971 | $\alpha L_2$= 21 $\times$ 0,77% |
| $R_b$=0,631 | |

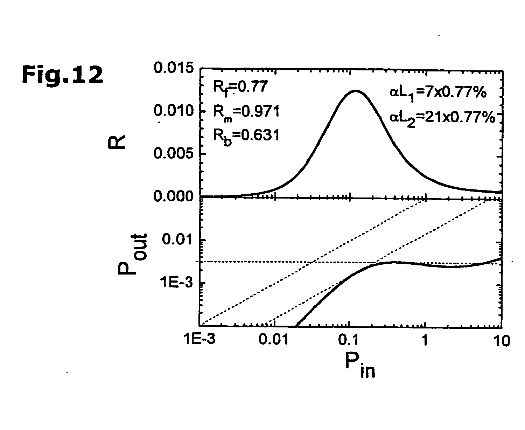

La FIGURE 12 représente la réflectivité et la dépendance de la puissance de sortie en fonction de la puissance d'entrée, obtenues pour ce même exemple de réalisation. L'empilement des différentes couches conduit à une fonction de régénération très proche de celle déduite de la formule analytique (2) et montre que le fonctionnement de la structure de cet exemple de réalisation présente bien les caractéristiques *Regen10* permettant la régénération des niveaux hauts et bas.

La FIGURE 13 représente la distribution du module carré du champ électrique E à la longueur d'onde de résonance (1550 nm), dans sa répartition sur l'épaisseur "z" de la structure de ce même exemple de réalisation. Le champ électrique E résulte des interférences entre les ondes contra-propagatives qui s'établissent dans la structure du fait des réflexions multiples sur les interfaces entre les différentes couches de semi-conducteurs épitaxiés. Le profil d'indice optique sur l'épaisseur de la structure est représenté sur l'ordonnée de droite pour référence, et apparaît en haut de la figure. Le champ électrique est maximal au niveau des deux séries de puits quantiques, permettant ainsi de minimiser la puissance de saturation de leur absorption.

La FIGURE 14 illustre la réponse spectrale du composant *Regen10* selon l'invention dans son deuxième mode de réalisation, pour l'exemple de réalisation précédent et dans le cas des faibles intensités. On voit que la réflectivité R s'annule à 1,55 $\mu$m de longueur d'onde, car le nombre de couches dans les miroirs de Bragg et dans les séries de puits quantiques a été choisi afin d'assurer l'adaptation d'impédance à basse puissance pour cette valeur de longueur d'onde. Cette adaptation d'impédance est obtenue en déterminant des valeurs de réflectivité respectant la relation (3) proposée par l'invention pour le composant "Regen10", relation qui est différente de la relation (1) utilisée dans l'art antérieur. La courbe obtenue pour le spectre en régime de basse intensité indique que l'adaptation d'impédance du type fournissant une réflectivité nulle à basse intensité peut être obtenue pour ce composant.

Lorsque la longueur d'onde s'écarte de 1,55 $\mu$m, un désaccord est introduit dans la cavité du fait de l'inadéquation de la longueur d'onde avec les épaisseurs choisies. La largeur spectrale à mi-hauteur prédite pour la résonance est de 13,6 nm, et indique la gamme typique de longueur d'onde sur laquelle le composant pourra être utilisé en régime de basse intensité.

Les composants selon l'invention peuvent être utilisés pour réaliser de nombreux types de dispositifs de traitement de signal lumineux, en particulier de type tout optique passif, et par exemple:

- un dispositif de traitement d'un signal lumineux de télécommunications, comprenant un composant selon l'invention pour régénérer passivement les niveaux hauts dudit signal;
- un dispositif de traitement d'un signal lumineux de télécommunication comprenant au moins un premier composant selon l'invention pour régénérer passivement les niveaux hauts d'un signal lumineux de télécommunication, précédé d'au moins un deuxième composant pour régénérer passivement les niveaux bas dudit signal, ledit deuxième composant comprenant au moins une cavité à absorbant saturable formée par un absorbant d'absorbance $\alpha_0 L$ intercalée entre un miroir arrière de réflectivité $R_b$ et un miroir avant de réflectivité $R_f$, lesdites réflectivités vérifiant sensiblement la relation d'adaptation d'impédance $R_f$ = exp$(-2\alpha_0 L)R_b$;
- un dispositif de traitement d'un signal lumineux de télécommunication comprenant au moins un composant monolithique selon l'invention pour régénérer passivement les niveaux hauts et bas dudit signal.

De plus, le composant selon l'invention peut être réalisé de façon à traiter une gamme spectrale d'une certaine largeur, typiquement de 5 à 20 nm de largeur. De tels dispositifs peuvent ainsi être réalisés en version multi-canal pour un coût, une complexité et un encombrement limités.

De tels dispositifs peuvent être utilisés pour établir les systèmes de télécommunications des prochaines générations, par exemple avec un débit par canal de 40 Gb/s, et possiblement d'une génération ultérieure à un débit de l'ordre de 160 Gb/s.

Des composants ou dispositifs selon l'invention peuvent aussi être intégrés dans des systèmes existants ou de performances similaires, par exemple dans le but d'en simplifier le fonctionnement, de les rendre plus compacts, plus fiables, plus performants, plus économiques, ou d'en améliorer la compatibilité avec les futurs systèmes.

De tels composants ou dispositifs peuvent aussi être très intéressants pour tester, par exemple en laboratoire de recherche ou en validation industrielle, les capacités et limites des systèmes en cours de développement, ou d'autres composants pouvant entrer dans de tels systèmes.

Bien sûr, l'invention n'est pas limitée aux exemples qui viennent d'être décrits et de nombreux aménagements peuvent être apportés à ces exemples sans sortir du cadre de l'invention.

## Revendications

1.  Composant optique de traitement d'un signal optique fonctionnant par réflexion dans une cavité (C1) résonante à absorption saturable formée sur un substrat entre un premier miroir (M1) dit arrière, situé du côté dudit substrat, et un deuxième miroir (M2) situé du côté du signal incident, la réflectivité du deuxième miroir étant supérieure ou égale à la réflectivité du miroir arrière.

2.  Composant selon la revendication précédente, **caractérisé en ce que** le miroir arrière (M1) est de nature métallique.

3.  Composant optique de traitement d'un signal optique fonctionnant par réflexion dans au moins une cavité (C1) résonante à absorption saturable formée entre un premier miroir (M1) dit arrière et un deuxième miroir (M2) situé du côté du signal incident, la réflectivités du deuxième miroir étant supérieure ou égale à la réflectivité du miroir arrière, ledit composant comprenant en outre une deuxième cavité (C2) résonante à absorption saturable formée entre le deuxième miroir (M2) et un troisième miroir (M3) situé du côté du signal incident par rapport audit deuxième miroir.

4.  Composant selon la revendication 3, **caractérisé en ce que** la réflectivité du deuxième miroir (M2) est supérieure ou égale à la réflectivité du troisième miroir (M3).

5.  Composant selon l'une quelconque des revendications 1 à 4, **caractérisé en ce que** la réflectivité du deuxième miroir (M2) est strictement supérieure à la réflectivité du miroir arrière (M1).

6.  Composant selon l'une des revendications 1 à 5, **caractérisé en ce que** l'absorbant saturable ($\alpha$L1, $\alpha$L2) comprend au moins une alternance de couches barrières (BA) et de couches (QW) réalisant des puits quantiques.

7.  Composant selon la revendication 6, **caractérisé en ce qu'**au moins une couche de puit quantique (QW) est réalisée à partir d'un semiconducteur dont la composition chimique présente au moins un atome ou un anion commun avec au moins une couche barrière (BA) qui lui est contiguë.

8.  Composant selon l'une des revendications 1 à 7, **caractérisé en ce que** l'absorbant saturable ($\alpha$L1, $\alpha$L2) comprend au moins une couche réalisant un plan de boîtes ou de points quantiques.

9.  Composant selon l'une des revendications 1 à 8, **caractérisé en ce qu'**au moins un des miroirs (M1, M2) est réalisé de façon à laisser passer la majeure partie de l'énergie électromagnétique qu'il ne réfléchit pas.

10. Composant selon l'une des revendications 1 ou 3 à 8, **caractérisé en ce que** le miroir arrière (M1) est réalisé de façon à laisser passer la majeure partie de l'énergie électromagnétique qu'il ne réfléchit pas, et repose sur un substrat (S) laissant passer la majeure partie de l'énergie électromagnétique reçue par ledit substrat aux longueurs d'onde de fonctionnement du composant.

11. Composant selon l'une des revendications 1 à 10, **caractérisé en ce qu'**au moins un des miroirs (M1, M2, M3) est réalisé par épitaxie de couches semi-conductrices formant un miroir de Bragg.

12. Composant selon l'une des revendications 1 à 11, **caractérisé en ce qu'**au moins un des miroirs (M1, M2, M3) est réalisé par dépôt de couches diélectriques formant un miroir de Bragg.

13. Dispositif de traitement d'un signal lumineux de télécommunications reçu sous la forme d'un signal incident, comprenant au moins un composant optique de traitement d'un signal optique fonctionnant par réflexion dans une cavité (C1) résonance à absorption saturable formée entre un premier miroir (M1) dit arrière et un deuxième miroir (M2), dont la réflectivité est supérieure ou égale à la réflectivité du miroir arrière, ledit composant étant disposé dans ledit dispositif de sorte que le signal incident est reçu du côté du deuxième miroir ; ou un composant selon l'une quelconque des revendications 1 à 12.

**14.** Dispositif de traitement d'un signal lumineux multi-canal de télécommunications, comprenant au moins un composant (Regen1, Regen10) selon l'une des revendications 1 à 12.

**15.** Dispositif de traitement d'un signal lumineux de télécommunication comprenant au moins un premier composant (Regen1, Regen10) selon l'une des revendications 1 à 12, précédé d'au moins un deuxième composant (Regen0), ledit deuxième composant comprenant au moins une cavité à absorbant saturable formée par un absorbant d'absorbance $\alpha_0 L$ intercalée entre un miroir arrière de réflectivité $R_b$ et un miroir avant de réflectivité $R_f$, lesdites réflectivités vérifiant sensiblement la relation d'adaptation d'impédance $R_f = \exp(-2\alpha_0 L)R_b$.

**16.** Dispositif de traitement d'un signal lumineux de télécommunication comprenant au moins un composant (Regen10) monolithique selon l'une des revendications 4 à 12.

**17.** Procédé de réalisation d'un composant optique de traitement d'un signal optique selon l'une des revendications 1 à 12,
ce procédé comprenant un empilement de couches formant une cavité (C1) résonante à absorption saturable entre un premier miroir (M1) dit arrière et un deuxième miroir (M2) situé du côté du signal incident, la réflectivité du deuxième miroir étant supérieure ou égale à la réflectivité du miroir arrière.

**18.** Procédé selon la revendication 17, **caractérisé en ce qu'**au moins une couche est formée par croissance épitaxiale à basse température.

**19.** Procédé selon l'une des revendications 17 ou 18, **caractérisé en ce qu'**il comprend une incorporation d'impuretés dans au moins une couche.

**20.** Procédé selon l'une des revendications 17 à 19, **caractérisé en ce qu'**il comprend une irradiation ionique d'au moins une couche.

**21.** Procédé de traitement d'un signal de télécommunication reçu sous la forme d'un signal incident, réalisant une régénération des niveaux hauts dudit signal en utilisant au moins
un composant optique de traitement d'un signal optique fonctionnant par réflexion dans une cavité (C1) résonante à absorption saturable formée entre un premier miroir (M1) dit arrière et un deuxième miroir (M2), dont la réflectivité est supérieure ou égale à la réflectivité du miroir arrière, ledit composant étant disposé dans ledit dispositif de sorte que le signal incident est reçu du côté du deuxième miroir ; ou
un composant ou un dispositif selon l'une des revendications 1 à 16.

**22.** Système de fabrication mettant en oeuvre le procédé selon l'une des revendications 17 à 20.

**23.** Système de télécommunication comprenant au moins un composant ou dispositif selon l'une des revendications 1 à 16.

**Claims**

**1.** Optical component for processing an optical signal operating by reflection in a saturable absorption resonant cavity (C1) formed on a substrate between a first so-called rear mirror (M1) situated beside said substrate and a second mirror (M2) situated beside the incident signal, the reflectivity of the second mirror being greater than or equal to the reflectivity of the rear mirror.

**2.** Component according to preceding claim, **characterized in that** the rear mirror (M1) is of metallic type.

**3.** Optical component for processing an optical signal operating by reflection in at least one saturable absorption resonant cavity (C1) formed between a first so-called rear mirror (M1) and a second mirror (M2) situated beside the incident signal, the reflectivity of the second mirror being greater than or equal to the reflectivity of the rear mirror, said component further comprising a second saturable absorption resonant cavity (C2) formed between the second mirror (M2) and a third mirror (M3) situated beside the incident signal with respect to said second mirror.

**4.** Component according to claim 3, **characterized in that** the reflectivity of the second mirror (M2) is greater than or equal to the reflectivity of the third mirror (M3).

**5.** Component according to one of claims 1 to 4, **characterized in that** the reflectivity of the second mirror (M2) is strictly greater than the reflectivity of the rear mirror (M1).

**6.** Component according to one of claims 1 to 5, **characterized in that** the saturable absorber ($\alpha$L1, $\alpha$L2) comprises at least one alternation of barrier layers (BA) and layers (QW) producing quantum wells.

**7.** Component according to claim 6, **characterized in that** at least one quantum well layer (QW) is produced from a semiconductor the chemical composition of which has at least one atom or anion common with at least one barrier layer (BA) which is contiguous with it.

**8.** Component according to one of claims 1 to 7, **characterized in that** the saturable absorber ($\alpha$L1, $\alpha$L2) comprises at least one layer producing a plane of quantum boxes or dots.

**9.** Component according to one of claims 1 to 8, **characterized in that** at least one of the mirrors (M1, M2) is produced so as to allow most of the electromagnetic energy which it does not reflect to pass through.

**10.** Component according to one of claims 1 or 3 to 8, **characterized in that** the rear mirror (M1) is produced so as to allow most of the electromagnetic energy which it does not reflect to pass through, and rests on a substrate (S) allowing most of the electromagnetic energy received by said substrate at the operating wavelengths of the component to pass through.

**11.** Component according to one of claims 1 to 10, **characterized in that** at least one of the mirrors (M1, M2, M3) is produced by epitaxy of semiconducting layers forming a Bragg mirror.

**12.** Component according to one of claims 1 to 11, **characterized in that** at least one of the mirrors (M1, M2, M3) is produced by depositing dielectric layers forming a Bragg mirror.

**13.** Device for processing a telecommunications light signal received as an incident signal, comprising at least an optical component for processing an optical signal operating by reflection in at least one saturable absorption resonant cavity (C1) formed between a first so-called rear mirror (M1) and a second mirror (M2), the reflectivity of which is greater than or equal to the reflectivity of the rear mirror, said component being positioned in said device so as the incident signal is received on the side of the second mirror; or
a component according to anyone of claims 1 to 12.

**14.** Device for processing a multi-channel telecommunications light signal, comprising at least one component (Regen1, Regen10) according to one of claims 1 to 12.

**15.** Device for processing a telecommunications light signal comprising at least a first component (Regen1, Regen10) according to one of claims 1 to 12, preceded by at least one second component (Regen0), said second component comprising at least one saturable absorber cavity formed by an absorber of absorbance $\alpha_0 L$ inserted between a rear mirror of reflectivity $R_b$ and a front mirror of reflectivity $R_f$, said reflectivities substantially conforming with the impedance adaptation relationship $R_f = \exp(-2\alpha_0 L)R_b$.

**16.** Device for processing a telecommunications light signal comprising at least one monolithic component (Regen10) according to one of claims 4 to 12.

**17.** Method for producing an optical component for processing an optical signal according to one of claims 1 to 12, this method comprising a stacking of layers forming a saturable absorption resonant cavity (C1) between a first so-called rear mirror (M1) and a second mirror (M2) situated beside the incident signal, the reflectivity of the second mirror being greater than or equal to the reflectivity of the rear mirror.

**18.** Method according to claim 17, **characterized in that** at least one layer is formed by low-temperature epitaxial growth.

**19.** Method according to one of claims 17 or 18, **characterized in that** it comprises incorporation of impurities into at least one layer.

**20.** Method according to one of claims 17 to 19, **characterized in that** it comprises ionic irradiation of at least one layer.

21. Method for processing a telecommunication signal received as an incident signal, carrying out a regeneration of the high levels of said signal through using at least

an optical component for processing an optical signal operating by reflection in at least one saturable absorption resonant cavity (C1) formed between a first so-called rear mirror (M1) and a second mirror (M2), the reflectivity of which is greater than or equal to the reflectivity of the rear mirror, said component being positioned in said device so as the incident signal is received on the side of the second mirror; or

one component or a device according to one of claims 1 to 16.

22. Manufacturing system implementing the method according to one of claims 17 to 20.

23. Telecommunication system comprising at least one component or device according to one of claims 1 to 16.

**Patentansprüche**

1. Optisches Bauelement zur Behandlung eines optischen Signals durch Reflexion in einem Hohlraumresonator (C1) mit sättigungsfähiger Absorption, der auf einem Sustrat zwischen einem ersten, als hinteren bezeichneten, auf der Seite dieses Substrats Spiegel (M1) und einem zweiten, auf der Seite des einfallenden Signals angeordneten Spiegel (M2) ausgebildet ist, wobei die Reflektivität des zweiten Spiegels höher als oder gleich wie die Reflektivität des hinteren Spiegels ist.

2. Bauelement nach dem vorhergehenden Anspruch, **dadurch gekennzeichnet, dass** der hintere Spiegel (M1) metallischer Natur ist.

3. Optisches Bauelement zur Behandlung eines optischen Signals durch Reflexion in einem Hohlraumresonator (C1) mit sättigungsfähiger Absorption, der zwischen einem ersten, als hinteren bezeichneten Spiegel (M1) und einem zweiten, auf der Seite des einfallenden Signals angeordneten Spiegel (M2) ausgebildet ist, wobei die Reflektivität des zweiten Spiegels höher als oder gleich wie die Reflektivität des hinteren Spiegels ist, wobei das besagte Bauteil ausserdem einen zweiten Hohlraumresonator (C2) mit sättigungsfähiger Absorption aufweist, der zwischen dem zweiten Spiegel (M2) und einem dritten Spiegel (M3) ausgebildet ist, der auf der Seite des einfallenden Signals relativ zu dem besagten zweiten Spiegel angeordnet ist.

4. Bauelement nach Anspruch 3, **dadurch gekennzeichnet, dass** die Reflektivität des zweiten Spiegels (M2) höher als oder gleich wie die Reflektivität des dritten Spiegels (M3) ist.

5. Bauteil nach irgendeinem der Ansprüche 1 bis 4, **dadurch gekennzeichnet**, die Reflektivität des zweiten Spiegels (M2) strikt höher ist als die Reflektivität des hinteren Spiegels (M1).

6. Bauteil nach einem der Ansprüche 1 - 5, **dadurch gekennzeichnet, dass** das sättigungsfähige Absorptionsmittel ($\alpha$L1, $\alpha$L2) wenigstens eine Wechselfolge von Barriereschichten (BA) und von Schichten (QW) umfasst, die Quantentöpfe bilden.

7. Bauelement nach Anspruch 6, **dadurch gekennzeichnet, dass** wenigstens eine Quantentopfschicht (QW) durch einen Halbleiter gebildet wird, dessen chemische Zusammensetzung wenigstens ein Atom oder ein Anion gemeinsam mit wenigstens einer Barriereschicht (BA) hat, an die er angrenzt.

8. Bauelement nach einem der Ansprüche 1 bis 7, **dadurch gekennzeichnet, dass** das sättigungsfähige Absorptionsmittel ($\alpha$L1, $\alpha$L2) wenigstens eine Schicht aufweist, die eine Ebene von Quantenlöchern oder -punkten bildet.

9. Bauteil nach einem der Ansprüche 1 bis 8, **dadurch gekennzeichnet, dass** wenigstens einer der Spiegel (M1, M2) zum Durchlassen des grössten Teils der elektomagnetischen Energie ausgebildet ist, die er nicht reflektiert.

10. Bauteil nach einem der Ansprüche 1 oder 3 bis 8, **dadurch gekennzeichnet, dass** der hintere Spiegel (M1) zum Durchlassen des grössten Teils der elektromagnetischen Energie ausgebildet ist, die er nicht reflektiert, und aufliegt auf einem Substrat (S), das den grössten Teil der elektromagnetischen, von besagtem Substrat auf Funktionswellenlängen des Bauteils empfangenen Energie durchlässt.

11. Bauteil nach einem der Ansprüche 1 bis 10, **dadurch gekennzeichnet, dass** wenigstens einer der Spiegel (M1, M2, M3) durch Epitaxie von Halbleiterschichten realisiert ist, die einen Bragg-Spiegel bilden.

12. Bauteil nach einem der Ansprüche 1 bis 11, **dadurch gekennzeichnet, dass** wenigstens einer der Spiegel (M1, M2, M3) durch Ablagerung von dielektrischen Schichten realisiert ist, die einen Bragg-Spiegel bilden.

13. Vorrichtung zur Behandlung eines Lichtsignals zur Telekommunikation empfangen in Form eines einfallenden Signals, mit wenistens einem optischen Bauelement zur Behandlung eines optischen Signals durch Reflexion in einem Hohlraumresonator (C1) mit sättigungsfähiger Absorption, der zwischen einem ersten, als hinteren bezeichneten Spiegel (M1) und einem zweiten Spiegel (M2) ausgebildet ist, dessen Reflektivität höher als oder gleich wie die Reflektivität des hinteren Spiegels ist, wobei das besagte Bauteil in der besagten Vorrichtung derart angeordnet ist, dass das einfallende Signal von der Seite des zweiten Spiegels empfangen wird; oder mit wenistens einem optischen Bauelement einem der Ansprüche 1 bis 12 ausgebildet ist.

14. Vorrichtung zur Behandlung eines Multikanal-Lichtsignals zur Telekommunikation, umfassend wenigstens ein Bauteil (Regen1, Regen10) nach einem der Ansprüche 1 bis 12.

15. Vorrichtung zur Behandlung eines Lichtsignals zur Telekommunikation mit wenigstens einem ersten Bauteil (Regen1, Regen10) nach einem der Ansprüche 1 bis 12, dem wenigstens ein zweites Bauteil (Regen0) vorgeordnet ist, wobei das besagte zweite Bauteil wenigstens einen Hohlraum mit sättigungsfähiger Absorption aufweist, der gebildet wird durch ein Absorptionsmittel mit der Absorption $\alpha_0 L$ eingefügt zwischen einen hinteren Spiegel mit der Reflektivität $R_b$ und einen vorderen Spiegel mit der Reflektivität $R_f$, wobei die besagten Reflektivitäten die Beziehung der Impendenzanpassung $R_f = \exp(-2\,\alpha_0 L\,)R_b$ wesentlich erfüllen.

16. Vorrichtung zur Behandlung eines Lichtsignals zur Telekommunikation mit wenigstens einem monolitischen Bauteil (Regen10) nach einem der Ansprüche 4 bis 12.

17. Verfahren zur Realisierung eines optischen Bauteils zur Behandlung eines optischen Signals nach einem der Ansprüche 1 bis 12, wobei dieses Verfahren ein Stapeln von einen Hohlraumresonator (C1) mit sättigungsfähiger Absorption bildenden Schichten zwischen einem ersten, als hinterem bezeichneten Spiegel (M1) und einem zweiten, auf der Seite des einfallenden Signals angeordneten Spiegel (M2) umfasst, wobei die Reflektivität des zweiten Spiegels höher als oder gleich wie die Reflektivität des hinteren Spiegels ist.

18. Verfahren nach Anspruch 17, **dadurch gekennzeichnet, dass** wenigstens eine Schicht durch epitaxiales Wachstum bei niedriger Temperatur gebildet wird.

19. Verfahren nach einem der Ansprüche 17 oder 18, **dadurch gekennzeichnet, dass** es eine Beimischung von Verunreinigungen in wenigstens einer Schicht umfasst.

20. Verfahren nach einem der Ansprüche 17 bis 19, **dadurch gekennzeichnet, dass** es eine ionische Bestrahlung wenigstens einer Schicht umfasst.

21. Verfahren zur Behandlung eines als einfallendes Signal empfangenen Signals zur Telekommunikation, mit welchem eine Regeneration der hohen Niveaus des genannten Signals realisiert wird und bei welchem wenigstens ein optisches Bauteil zur Behandlung eines optischen Signals durch Reflexion in einem, zwischen einem ersten, als hinteren bezeichneten Spiegel (M1) und einem zweiten Spiegel (M2), dessen Reflekivität höher als oder gleich wie die Reflektivität des hinteren Spiegels ist, ausgebildeten Hohlraumresonantor (C1) mit sättigungsfähiger Absorption verwendet wird, wobei das besagte Bauteil in der genannten Vorrichtung derart angeordnet ist, dass das einfallende Signal von der Seite des zweiten Spiegels empfangen wird; oder wenigstens ein Bauteil oder eine Vorrichtung nach einem der Ansprüche 1 bis 16 verwendet wird.

22. Fabrikationssystem zur Implementierung des Verfahrens nach einem der Ansprüche 17 - 20.

23. Telekommunikationssystem mit wenigstens einem Bauteil oder einer Vorrichtung nach einem der Ansprüche 1 bis 16.

**Fig.1a**

**Fig.1b**

$P_{out}$

1.0
0.5
0.0

(a)

(b)

**Fig.1c**

**Fig.1d**

(c)

(d)

-1    0    1

Temps

Regen0
(selon l'art antérieur)

**Fig.2a**

**Fig.2b**

R
1

$P_{sat}$    $P_{in}$

Regen1

**Fig.3a**

**Fig.3b**

$x \mapsto 1/x$

R

1

$P_{sat}$   $P_{in}$

Regen10

**Fig.4a**

**Fig.4b**

$x \mapsto 1/x$

R

1

$P_{sat}$   $P_{in}$

**Fig.5**

Comparaison Expériences *vs* Prédictions
(selon l'art connu)

**Fig.6**

Regen0
(selon l'art antérieur)

**Fig.7**

Regen1

$M_f = M2 \ (R_f)$

$\varphi_1$

$\alpha L_1$

$\varphi_2$

$M_b = M1 \ (R_b)$

$S$

**Fig.8**

Regen1

$\alpha L_1 = 5 \times 0.77\%$

$R_f = 0.96$

$R_b = 0.95$

$R$

$P_{out}$

$P_{in}$

**Fig.9**

Regen10

**Fig.10**

Regen10

## Fig.11

Mf=M3

Mm=M2

Mb=M3

Air

Air

InGaAlAs

InP
} x 8 : Mf=M3 (Bragg)

InP ———— φ1 (Phase)

InAlAs    BA
InGaAs    QW } x 7
InAlAs    BA
} αL1 (Absorbant)

InP ———— φ2 (Phase)

InGaAlAs

InP
} x 25: Mm=M2 (Bragg)

InP ———— φ3 (Phase)

InAlAs    BA
InGaAs    QW } x 21
InAlAs    BA
} αL2 (Absorbant)

InP ———— φ4 (Phase)

InGaAlAs

InP
} x 11: Mb=M1 (Bragg)

InP ———— S (Substrat)

Fig.12

**Fig.13**

**Fig.14**

**EP 2 052 291 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2835065


**Littérature non-brevet citée dans la description**

- **O. KREBS ; W. SEIDEL ; J. P. ANDRÉ ; D. BERTHO ; C. JOUANIN ; P. VOISIN.** Investigations of giant ''forbidden'' optical anisotropy in GaInAs-InP quantum well structures. *Semicond. Sci. Technol.,* 1997, vol. 12, 938-942